# EUROPÄISCHE PATENTSCHRIFT

(11) **EP 2 403 891 B1**
(45) Veröffentlichungstag und Bekanntmachung des Hinweises auf die Patenterteilung: **02.01.2013**
(21) Anmeldenummer: 10703898.6
(22) Anmeldetag: 16.02.2010
(51) Int. Cl.: C08G 18/83, C08G 18/10, C09J 175/04

(54) **VERWENDUNG EINER HAFTKLEBEMASSE**
USE OF A PRESSURE-SENSITIVE ADHESIVE COMPOUND
L'UTILISATION D'UNE MASSE AUTO-ADHÉSIVE

(30) Priorität: 04.03.2009 DE 102009011167
(43) Veröffentlichungstag der Anmeldung: 11.01.2012
(73) Patentinhaber: TESA SE, 20253 Hamburg (DE)
(72) Erfinder: UTESCH, Nils, 201107 Shanghai (HK)
(86) Internationale Anmeldenummer: PCT/EP2010/051913
(87) Internationale Veröffentlichungsnummer: WO 2010/100025

(56) Entgegenhaltungen:
- US-A1- 2005 282 024
- US-A1- 2008 058 492
- DATABASE WPI Week 200424 Thomson Scientific, London, GB; AN 2004-249851 XP002581010 & JP 2003 292928 A (TOYO INK MFG CO LTD) 15. Oktober 2003 (2003-10-15)

## Beschreibung

Die vorliegende Erfindung betrifft die Verwendung einer Haftklebemasse zur Verklebung optischer Bauteile, insbesondere optischer Folien, gemäß Anspruch 1.

Haftklebemassen werden heute sehr vielfältig eingesetzt. So existieren im Industriebereich die verschiedensten Anwendungen. Besonders zahlreich werden Klebebänder basierend auf Haftklebemassen im Elektronikbereich oder im Konsumgüterelektronikbereich eingesetzt. Auf Grund der hohen Stückzahlen lassen sich hier Haftklebebänder sehr schnell und leicht verarbeiten, so dass andere Prozesse, wie z.B. Nieten oder Schweißen, zu aufwändig wären. Neben der normalen Verbindungsfunktion müssen diese Haftklebebänder ggf. noch weitere Funktionen übernehmen. So kann dies z.B. eine thermische Leitfähigkeit, eine elektrische Leitfähigkeit oder auch eine optische Funktion sein. In letzterem Fall werden z.B. Haftklebebänder eingesetzt, die lichtabsorbierende oder lichtreflektierende Funktionen haben. Eine weitere optische Funktion ist beispielsweise eine geeignete Lichttransmission. Hier werden Haftklebebänder und Haftklebemassen eingesetzt, die sehr transparent sind, keine Eigenfärbung aufweisen und auch eine hohe Lichtstabilität besitzen.

In vielen Fällen hat eine Haftklebemasse für optische Zwecke neben der Verbindungsfunktion die Funktion, Luft auszuschließen, da Luft einen Brechungsindex von 1 aufweist und die optischen Folien oder Gläser einen in der Regel deutlich größeren Brechungsindex aufweisen. Der Unterschied der Brechungsindizes führt beim Übergang von Luft zum optischen Bauteil zu einer Reflektion, die die Transmission reduziert. Ein Weg dieses Problem zu lösen stellen Antireflektivbeschichtungen dar, die den Übergang des Lichtes in das optische Bauteil erleichtern und die Reflektion vermindern. Alternativ oder ergänzend kann auch eine optische Haftklebemasse eingesetzt werden, die einen ähnlichen Brechungsindex wie das optische Bauteil aufweist. Dadurch wird die Reflektion an dem optischen Bauteil deutlich minimiert und die Transmission erhöht.

Eine typische Anwendung sind z.B. die Verklebung von Touch Panels auf dem LCD oder OLED Display oder die Verklebung von ITO-Filmen (indium tin oxide - Indiumzinnoxid) für kapazitive Touch Panels. Insbesondere die Verklebung von ITO-Filmen stellt eine besondere Herausforderung dar. So werden hier besondere Anforderungen an die Neutralität der Haftklebemassenformulierung gestellt. Die Haftklebemasse darf keine Säurefunktionen enthalten, die z.B. bei Kontakt mit ITO-Filmen die elektrische Leitfähigkeit über einen längeren Zeitraum negativ beeinflussen könnte. Eine weitere Anforderung besteht in dem Auffliesverhalten. So weisen z.B. viele ITO-Filme Strukturierungen, üblicherweise Mikrostrukturierungen in der Oberfläche auf, die von der Haftklebemasse gefüllt werden sollen. Dies sollte ohne den Einschluss von Blasen erfolgen, da eine Blasenbildung die Transmission mindern würde.

JP 2003 292928 A offenbart die Verwendung eines silylierten Polyurethan-Haftklebstoffes für optische Folien, die in LCDs eingesetzt werden und eine hohe Transparenz aufweisen. Der silylierte Polyurethan-Haftklebstoff wird auf eine Folie aufgetragen und dann auf einen PET-Film transferiert.

Für transparente Verklebungen sind eine Vielzahl von Acrylathaftklebemassen bekannt, die im optischen Bereich eingesetzt werden. In US 6,703,463 B2, der JP 2002-363523 A oder der US2002/0098352 A1 werden Acrylathaftklebemassen beschrieben, die unterschiedliche Brechungsindizes aufweisen. Diese Klebemassen weisen jedoch Nachteile im Hinblick auf eine elektrische Neutralität gegenüber ITO-Filmen auf.

Des Weiteren werden aber auch Siliconhaftklebemassen eingesetzt. Solche Klebemassen beschreibt die EP 1 652 899 B1. Die hier verwendeten Siliconhaftklebemassen weisen jedoch eine nur sehr geringe Klebkraft auf und sind daher nicht für die zuvor genannten permanenten Verklebungen geeignet. Weitere Siliconhaftklebemassen werden auch in der US 2006/008662 A1 beschrieben. Auch die hier beschriebenen Haftklebemassen weisen nur eine geringe Klebkraft auf, so dass sie nicht für permanente Verklebungen geeignet sind.

Somit besteht immer noch der Bedarf für eine verbesserte optische Haftklebemasse, die die zuvor genannten Nachteile nicht aufweist. Insbesondere sollte eine geeignete Klebemasse eine hohe optische Transparenz sowie eine hohe UV-Stabilität aufweisen. Für die bevorzugte Anwendung der Verklebung elektrisch leitfähiger Substrate, insbesondere von ITO-Filmen, sollte sich die Klebemasse inert verhalten.

Die vorliegende Erfindung löst das zuvor beschriebene Problem durch die Verwendung einer Haftklebemasse, die auf silylierten Polyurethanen basiert, für die Verklebung optischer Bauteile, insbesondere optischer Folien, wobei die Haftklebemasse auf folgenden Komponenten basiert:
a) einem Urethanpolymer, generiert aus di- oder multifunktionellen Isocyanaten (NCO) und di- oder multifunktionellen Alkoholen (OH), wobei das NCO/OH Verhältnis entweder <1 oder>1 ist,
   welches mit mindestens einer Si(OR)₃₋ₓ Gruppe funktionalisiert ist, wobei R ein Alkyl- oder Acylrest und x die Zahl 0 oder 1 ist,
b) einem organometallischen Katalysator aus der 3., 4. oder 5. Hauptgruppe
c) einer katalytischen Menge Wasser,
d) einem Organopolysiloxanharz mit der Formel: (R¹₃SiO_{1/2})_{y}(SiO_{4/2})₁,
   wobei R¹ eine substituierte oder unsubstituierte monovalente Kohlenwasserstoffgruppe, ein Wasserstoffatom oder eine Hydroxygruppe und y eine Zahl zwischen 0,5 und 1,2 ist, oder
   einem klebrigmachenden Harz auf Basis von Terpenen, Terpen-Phenolen, Cumarenen, Indenen oder Kohlenwasserstoffen mit einem Erweichungsbereich zwischen 80 und 150°C,
e) optional weiteren Additiven oder Füllstoffen, und
wobei die Haftklebemasse eine Transmission nach ASTM D 1003 größer 86 % und einen Haze nach ASTM D 1003 kleiner 5 % aufweist und die Haftklebemasse in Form eines Klebebandes bereitgestellt ist, das mindestens eine Klebeschicht mit einer Schichtdicke im Bereich von 100 bis 250 µm aufweist. Bevorzugte Ausgestaltungen und Weiterbildungen sind Gegenstand der jeweiligen Unteransprüche.

Erfindungsgemäß wurde erkannt, dass feuchtigkeitsvemetzende silylierte Polyurethan(PU)haftklebemassen vorteilhaft eingesetzt werden können. Silylierte PU-Klebmassen sind Isocyanat-frei und werden über hochstabile Si-O-Si Bindungen vernetzt. Aufgrund dieses stabilen Netzwerkes zeichnen sich silylierte Polyurethanklebmassen durch chemische Resistenz gegenüber Lösungsmitteln, Wasser, Säuren und Laugen aus. Die Witterungsbeständigkeit gegenüber Luftfeuchtigkeit, Ozon und UV-Licht ist dementsprechend hoch. Das widerstandsfähige Si-O-Si Netzwerk garantiert weiterhin eine hohe thermische Belastbarkeit und Scherresistenz.

Mittels silylierten PU-Haftklebemassen können insbesondere die für optische Anwendungen erforderlichen Eigenschaften erzielt werden. So wiesen die Klebemassen nach ASTM D 1003 jeweils eine Lichttransmission größer 86 % und einen Haze kleiner 5 % auf und eignen sich somit insbesondere für die Verklebung optischer Bauteile. Aufgrund der guten Kohäsions- und Adhäsionseigenschaften sind diese Klebemassen insbesondere auch für die Verklebung von flexiblen Objekten, beispielsweise Folien geeignet. Der Haze-Wert ist ein Maß für die Eintrübung einer Substanz. Ein hoher Haze-Wert bedeutet eine geringe Sichtbarkeit durch die entsprechende Substanz hindurch. Die Lichttransmission liegt bei 550 nm besonders bevorzugt bei größer 88 %.

Haftklebmassen auf Basis von silylierten PUs sind an sich bekannt und im Handel frei erhältlich; der Stand der Technik ist unter anderem in folgenden Schriften dokumentiert: US 2007/129527 A1; US 2008/0058492 A1; WO 2006/118766 A1; JP 2003 292928 A.

Silylierte Polyurethanklebmassen werden in einem 2-Stufenprozess hergestellt. Ein hochmolekulares Urethanpräpolymer wird durch eine Reaktion aus ausgewählten di- oder multifunktionellen Isocyanaten (NCO) mit ausgewählten Polyolen (OH) generiert. Dieses Präpolymer kann, abhängig vom ursprünglichen NCO/OH Verhältnis von >1 oder <1 entweder isocyanat- oder hydroxyterminiert sein. Abhängig vom gewählten Präpolymer und dessen Terminus wird dies entweder mit einem amino- oder isocyanatofunktionellen Trialkoxysilan umgesetzt. Als Lösungsmittel werden vorzugsweise Ester oder Ketone verwendet, um ein möglichst hohe Molmasse der silylierten Polyurethanmassen zu erzielen. Da Wasser der Schlüsselfaktor für die Vernetzung dieser Klebmassen ist, sollte bevorzugt ein Lösungsmittel mit einer genügenden Wasserlöslichkeit sowohl für die Herstellung der silylierten Polyurethanklebmasse als auch für deren Vernetzung gewählt werden. Die Vernetzung verläuft in einem 2-Stufenprozess. Zunächst hydrolisieren die alkoxylierten Silane (Si-OR) zu Silanolen (Si-OH), die anschließend einer Kondensationsreaktion mit Ausbildung von stabilen Si-O-Si Bindungen unterliegen. Aus der Polyurethanchemie bekannte Katalysatoren beschleunigen diese Reaktion zusätzlich.

Zur Erzielung der erforderlichen klebtechnischen Eigenschaften werden den Klebmassen als eine mögliche Komponente d) so genannte MQ-Harze mit der Formel (R¹₃SiO_{1/2})ₓ(SiO_{4/2})₁ zugesetzt. Als M-Einheit werden darin die (R¹₃SiO_{1/2})-Einheiten bezeichnet, als Q-Einheit die (SiO_{4/2})-Einheiten. Alternativ zu den MQ-Harzen können herkömmliche, in der Klebstoffindustrie bekannte Harze wie Terpen-, Terpen-Phenol-, Cumaren-, Inden- oder Kohlenwasserstoffharze zur Erhöhung des Adhäsionsvermögens eingesetzt werden.

### Klebmasse

Die einzusetzende Klebemasse basiert auf folgenden Komponenten:
a) einem Urethanpolymer, generiert aus di- oder multifunktionellen Isocyanaten (NCO) und di- oder multifunktionellen Alkoholen (OH), wobei das NCO/OH Verhältnis sowohl <1 als auch >1 sein kann, wobei das Urethanpolymer mit mindestens einer Si(OR)₃₋ₓ Gruppe funktionalisiert ist, wobei R ein Alkyl- oder Acylrest und x die Zahl 0 oder 1 sein kann,
b) einem organometallischen Katalysator aus der 3., 4. oder 5. Hauptgruppe
c) einer katalytischen Menge Wasser,
d) einem Organopolysiloxanharz mit der Formel: (R¹₃SiO_{1/2})_{y}(SiO_{4/2})₁,
   wobei R¹ eine substituierte oder unsubstituierte monovalente Kohlenwasserstoffgruppe, ein Wasserstoffatom oder eine Hydroxygruppe und y eine Zahl zwischen 0,5 und 1,2 ist, oder einem klebrigmachenden Harz auf Basis von Terpenen, Terpen-Phenolen, Cumarenen, Indenen oder Kohlenwasserstoffen mit einem Erweichungsbereich zwischen 80 und 150°C,
e) optional weiteren Additiven oder Füllstoffen.

Zur Erzielung der erforderlichen klebtechnischen Eigenschaften werden den beschriebenen Formulierungen als eine mögliche Komponente d) so genannte MQ-Harze mit der Formel

(R¹₃SiO_{1/2})_{y}(SiO_{4/2})₁ zugesetzt. Als M-Einheit werden darin die (R¹₃SiO_{1/2})-Eirtheiten bezeichnet, als Q-Einheit die (SiO_{4/2})-Einheiten. Jedes R¹ stellt unabhängig voneinander eine monovalente gesättigte Kohlenwasserstoffgruppe, eine monovalente ungesättigte Kohlenwasserstoffgruppe, eine monovalente halogenierte Kohlenwasserstoffgruppe, ein Wasserstoffatom oder eine Hydroxygruppe dar. Das Verhältnis von M-Einheiten zu Q-Einheiten (M:Q) liegt bevorzugt im Bereich von 0,5 bis 1,2.

Bei den MQ-Harzen handelt es sich vorteilhaft um solche mit einem gewichtsmittleren Molekulargewicht M_{W} von 500 g/mol ≤ M_{w} ≤ 100.000 g/mol, bevorzugt von 1.000 g/mol ≤M_{w}≤ 25.000 g/mol, wobei sich die Angaben des mittleren Molekulargewichtes M_{w} in dieser Schrift auf die Bestimmung per Gelpermeationschromatographie beziehen (siehe experimenteller Teil).

Es hat sich als günstig herausgestellt, wenn Klebemassen eingesetzt werden, bei denen das Anteilsverhältnis - bezogen auf Gewichtsprozent - von silylierter PU-Klebmasse zu MQ-Harz im Bereich von 10:90 bis 90: 1 0, bevorzugt im Bereich von 40:60 bis zu 90: 1 0, liegt.

MQ-Harze sind im Handel frei erhältlich. Beispielhaft seien hier genannt: SL 160, SL 200, DC 2-7066 von Dow Corning, SR 545, SR 1000, 6031 SL von Momentive Performance Materials, CRA 17, CRA 42, MQ-Harz 803 von Wacker.

Als alternative Komponente d) werden die in der Klebstoffindustrie bekannte Harze wie Terpen-, Terpen-Phenol-, Cumaren-, Inden- oder Kohlenwasserstoffharze zur Erhöhung des Adhäsionsvermögens eingesetzt. Besonders vorteilhaft ist die Verwendung von Harzen, die einen Erweichungsbereich von 80 bis 150°C aufweisen. Beispielhaft seien an dieser Stelle genannt: KE-311 Arakawa Technical Industries und Kristalex F85, Kristalex F 100 und Kristalex 115 von Eastmen Chemical Company.

### Weitere Abmischkomponenten

Als weitere Additive können typischerweise genutzt werden:
- primäre Antioxidanzien, wie zum Beispiel sterisch gehinderte Phenole
- sekundäre Antioxidanzien, wie zum Beispiel Phosphite oder Thioether
- Prozessstabilisatoren, wie zum Beispiel C-Radikalfänger
- Lichtschutzmittel, wie zum Beispiel UV-Absorber oder sterisch gehinderte Amine
- Verarbeitungshilfsmittel
- Füllstoffe, wie zum Beispiel Siliziumdioxid, Glas (gemahlen oder in Form von Kugeln), Aluminiumoxide oder Zinkoxide, wobei die Füllstoffe so klein gemahlen sind, dass Sie optisch nicht sichtbar sind
- Plastifizierungsmittel, wie zum Beispiel Flüssigharze, Weichmacheröle oder niedermolekulare flüssige Polymere, wie zum Beispiel niedermolekulare Polybutene mit Molmassen < 1500 g/mol (Zahlenmittel)

Die Haftklebrigkeit der Haftklebemasse kann optional erst durch thermische Aktivierung oder durch Lösemittelaktivierung erzeugt werden.

Zusätzlich zur wasserkatalysierten Vernetzung durch die Trialkoxysilylendgruppen (Si-OR) können diese Klebmassen auch durch aktinische Strahlung, insbesondere Elektronenstrahlen, vernetzt werden. Dabei wird bei der Beschichtung aus Lösung zunächst das Lösungsmittel bei einer Temperatur von 70-100°C und einer Verweilzeit von mindestens 1,5 Minuten entfernt. Anschließend wird mit einer Elektronenstrahl-Dosis von mindestens 10 kGy vernetzt. Diese Art der Vernetzung ist besonders vorteilhaft, da sich so die Kohäsion nahezu stufenlos einstellen lässt, ohne dass die Eigenschaften Tack und Adhäsion negativ beeinflusst werden.

Weitere Einzelheiten, Ziele, Merkmale und Vorteile der vorliegenden Erfindung werden nachfolgend anhand bevorzugter Ausführungsbeispiele näher erläutert. In der Zeichnung zeigt
Fig. 1 ein einseitiges Haftklebeband,
Fig. 2 ein beidseitiges Haftklebeband,
Fig. 3 ein trägerfreies Haftklebeband (Transferklebeband),
Fig. 4 die Verklebung einer Rückseitenverstärkungsplatte eines Touch Panels,
Fig. 5 die Verklebung verschiedener Schichten eines Touch Panels.

### Produktaufbau

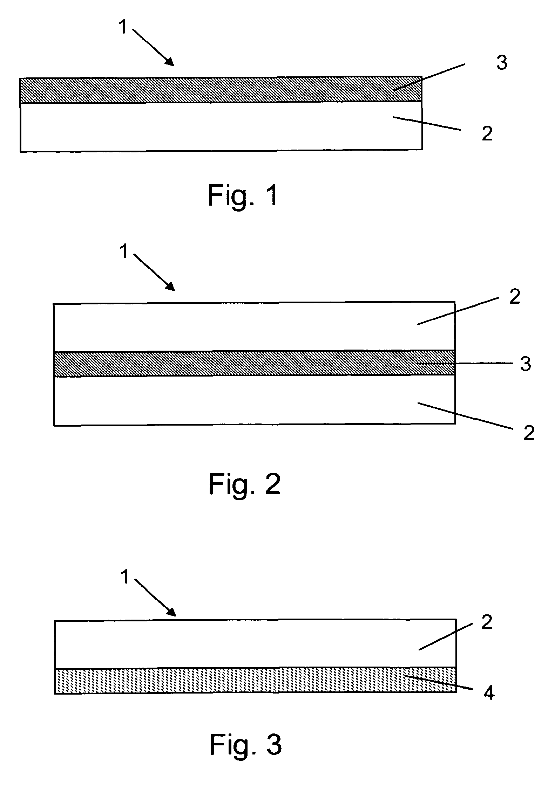

Fig. 1 zeigt ein einseitig klebendes Haftklebeband 1 zur Verwendung bei der Verklebung von optischen Bauteilen, insbesondere von optischen Folien. Das Haftklebeband 1 weist eine Klebeschicht 2 auf, die durch Beschichtung einer der zuvor beschriebenen Haftklebemasse auf einen Träger 3 hergestellt wurde.

Für die Anwendung bei der Verklebung von optischen Bauteilen kommt auch als Träger 2 ein transparenter Träger 2 zum Einsatz. Der Träger 2 ist also ebenfalls im Bereich des sichtbaren Lichtes transparent, weist bevorzugt also einen Transmissionsgrad von ebenfalls mindestens 86 % auf.

Zusätzlich (nicht gezeigt) kann noch eine Trennfolie vorgesehen sein, die die Klebeschicht 2 vor der Verwendung des Haftklebebandes 1 abdeckt und schützt. Die Trennfolie wird dann vor der Verwendung von der Klebeschicht 2 entfernt.

Der in Fig. 2 dargestellte Produktaufbau zeigt ein Haftklebeband 1 mit einem transparenten Träger 3, der beidseitig mit einer Haftklebemasse beschichtet ist und somit zwei Klebeschichten 2 aufweist.

Auch bei dieser Ausgestaltung wird bevorzugt zumindest eine Klebeschicht 2 mit einer Trennfolie abgedeckt. Bei einem aufgerollten Klebeband kann diese Trennfolie ggf. auch die zweite Klebeschicht 2 abdecken. Es können aber auch mehrere Trennfolien vorgesehen sein.

Des Weiteren ist es möglich, dass die Trägerfolie mit einer oder mehreren Beschichtungen versehen ist. Weiterhin kann auch nur eine Seite des Haftklebebandes mit der beschriebenen Haftklebemasse ausgestattet sein und auf der anderen Seite eine andere transparente Haftklebemasse eingesetzt werden.

Der in Fig. 3 dargestellte Produktaufbau zeigt ein Haftklebeband 1 in Form eines Transferklebebandes, d.h. ein trägerfreies Haftklebeband 1. Hierzu wird die Haftklebemasse einseitig auf eine Trennfolie 4 beschichtet und bildet so eine Haftklebeschicht 2 aus. Ggf. wird diese Haftklebeschicht 2 noch auf ihrer zweiten Seite mit einer weiteren Trennfolie abgedeckt. Zur Verwendung des Haftklebebandes werden dann die Trennfolien entfernt.

Als Alternative zu Trennfolien können beispielsweise auch Trennpapiere oder dgl. eingesetzt werden. In diesem Fall sollte die Oberflächenrauhigkeit des Trennpapiers aber reduziert sein, um eine möglichst glatte Haftklebemassenseite zu realisieren.

### Trägerfolien

Als Trägerfolien können eine Vielzahl von hochtransparenten Polymerfolien eingesetzt werden. Insbesondere spezielle hochtransparente PET Folien können eingesetzt werden. So eignen sich z.B. Folien der Firma Mitsubishi mit dem Handelsnamen Hostaphan™ oder der Firma Toray mit dem Handelsnamen Lumirror™. Eine weitere sehr bevorzugte Spezies der Polyester stellen die Polybutylenterephthalat Folien dar.

Neben Polyesterfolien lassen sich auch hochtransparente PVC-Folien einsetzen. Diese Folien können Weichmacher enthalten, um die Flexibilität zu erhöhen. Weiterhin können PC, PMMA und PS Folien eingesetzt werden. Neben reinem Polystyrol lassen sich zur Verringerung der Kristallisationsneigung neben Styrol auch andere Comonomere, wie z.B. Butadien, einsetzen.

Weiterhin können Polyethersulfon- und Polysulfon-Filme als Trägermaterialien eingesetzt werden. Diese sind z.B. von der Firma BASF unter dem Tradenamen Ultrason™ E und Ultrason™ S zu beziehen. Ferner können auch besonders bevorzugt hochtransparente TPU-Folien eingesetzt werden. Diese sind z.B. kommerziell erhältlich von der Firma Elastogran GmbH. Es können auch hochtransparente Polyamid- und Copolyamid-Folien verwendet werden sowie Folien auf Basis von Polyvinylalkohol und Polyvinylbutyral.

Neben einschichtigen Folien können auch mehrschichtige Folien verwendet werden, die z.B. coextrudiert hergestellt werden. Hierfür können die zuvor genannten Polymermaterialien miteinander kombiniert werden.

Ferner können die Folien behandelt sein. So können z.B. Bedampfungen vorgenommen sein, beispielsweise mit Zinkoxid, oder es können Lacke oder Haftvermittler aufgetragen sein. Eine weitere mögliche Additivierung stellen UV-Schutzmittel dar, die als Additive in der Folie vorliegen können oder als Schutzschicht aufgebracht sein können.

Die Foliendicke beträgt in einer bevorzugten Auslegung zwischen 4 µm und 150 µm, besonders bevorzugt zwischen 12 µm und 100 µm.

Die Trägerfolie kann beispielsweise auch eine optische Beschichtung aufweisen. Als optische Beschichtung eignen sich insbesondere Beschichtungen, die die Reflektion verringern. Dies wird beispielsweise durch eine Absenkung der Brechungsindexdifferenz für den Übergang Luft / optische Beschichtung erreicht.

### Trennfolie

Zum Schutz der offenen (Haft-)Klebemasse wird diese bevorzugt mit einer oder mehreren Trennfolien abgedeckt. Neben den Trennfolien können - auch wenn nicht sehr bevorzugt - Trennpapiere eingesetzt werden, wie z.B. Glassine-, HDPE- oder LDPE-Trennpapiere, die in einer Auslegung eine Siliconisierung als Trennlage aufweisen.

### Beschichtung

Die (Haft-)Klebemassen können aus Lösung beschichtet werden. Für die Beschichtung aus Lösung wird die (Haft-)Klebemasse in gängigen Lösungsmitteln, wie z.B. Toluol, Benzin, Heptan, Ethylacetat, Butylacetat, Methylethylketon, Methyisobutylketon, etc. gelöst und dann über eine Beschichtungsdüse oder ein Rakel beschichtet. Besonders bevorzugt ist die Fertigung der (Haft-)Klebemassen aus der Lösung, um eine zu frühe Vernetzung zu verhindern. Es können aber auch alle anderen Beschichtungsverfahren eingesetzt werden, die lösungsmittelhaltige Beschichtungen zulassen.

### Verwendung

Die zuvor beschriebenen (Haft-)Klebemassen und (Haft)-Klebebänder eignen sich zur Verwendung in optischen Anwendungen, wobei bevorzugt permanente Verklebungen mit Verweilzeiten von größer einem Monat vorgenommen werden.

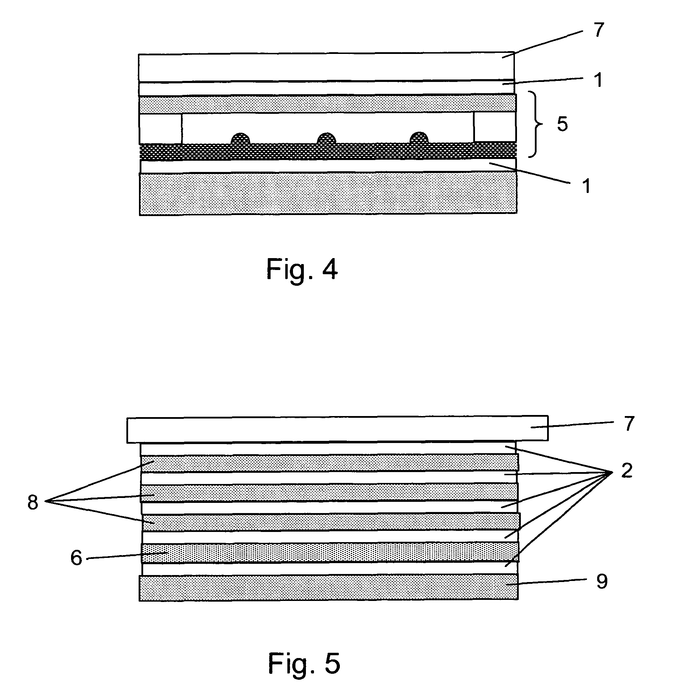

Ein besonders bevorzugtes Einsatzgebiet umfasst die Verklebung von Touch Panels sowie die Herstellung von Touch Panels. In Fig. 4 sind typische Verklebungen in resistiven Touch Panels dargestellt. Hierfür werden bevorzugt Transfer-(Haft)-Klebebänder, also solche ohne Träger, eingesetzt. Topfilm oder Versteifungsplatte können aber auch in Form eines einseitigen (Haft)-Klebebandes mit dem entsprechenden Träger eingesetzt und verklebt werden.

Fig. 4 zeigt ein Touch Panel 5, das mittels eines ersten Haftklebebandes 1 auf einem Substrat 6, beispielsweise einer Plastikplatte oder einer Glasplatte verklebt ist. Auf das Touch Panel 5 ist dann mittels eines zweiten Haftklebebandes 1 ein Topfilm 7 aufgebracht, der üblicherweise eine Antikratzschicht aufweist.

In Fig. 5 sind typische Verklebungen für kapazitive Touch Panels dargestellt. Insbesondere für die Verklebung strukturierter ITO-Filme 8 werden Haftklebeschichten 2 eingesetzt, damit eine gute Benetzung der Strukturierung erreicht wird.

In Fig. 5 ist ferner die Verklebung eines Schutzfilmes oder eines Mobilfunktelefonfensters 7, eines Substrats 6 als Rückseitenverstärkungsplattes eines kapazitiven Touch Panels sowie eines Displays 9 mit der beschriebenen Haftklebemasse gezeigt. Dabei können sowohl die Haftklebemasse an sich als auch diese in Form eines Transferklebebandes, als einseitiges oder auch als doppelseitiges Haftklebeband mit Trägerfolie eingesetzt werden.

### Prüfmethoden

### A. Klebkraft

Die Prüfung der Schälfestigkeit (Klebkraft) erfolgte gemäß PSTC-101. Das Klebeband wird auf eine Glasplatte aufgebracht. Ein 2 cm breiter Streifen des Klebebandes durch dreimaliges doppeltes Überrollen mittels einer 2 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen. Die Kraft wird in N/cm angegeben. Im Fall einer Messung eines Transferklebebandes wird von diesem zuvor die Trennfolie entfernt. Diese Trennfolie wird anschließend durch eine 23 µm starke PET Folie ersetzt.

### B. Transmission

Die Bestimmung der Transmission erfolgt bei 550 nm nach ASTM D1003. Vermessen wurde der Verbund aus optisch transparenter Haftklebemasse und Glasplatte.

### C. Haze

Die Bestimmung des Haze erfolgt nach ASTM D1003.

### D. Lichtbeständigkeit

Der Verbund aus Haftklebemasse und Glasplatte wird in der Größe 4 x 20 cm² für 250 h mit Osram Ultra Vitalux 300 W Lampen in einem Abstand von 50 cm bestrahlt. Nach der Bestrahlung wird nach Prüfmethode C die Transmission bestimmt.

### E. Wechselklimatest

Die Haftklebemasse wird als einseitiges Haftklebeband (50 g/m² Masseauftrag, 50 µm PET Folie vom Typ Mitsubishi RNK 50) luftblasenfrei auf eine Glasplatte verklebt. Der Prüfstreifen besitzt die Dimension 2 cm Breite und 10 cm Länge. Es wird nach Prüfmethode A die Klebkraft auf Glas bestimmt.

Parallel wird ein derartiger Klebeverbund in einem Wechselklimaschrank platziert und für 1000 Zyklen gelagert. Ein Zyklus umfasst:
- die Lagerung bei -40°C für 30 Minuten
- Hochheizen innerhalb von 5 Minuten auf 85°C
- die Lagerung bei 85°C für 30 Minuten
- das Abkühlen auf -40°C innerhalb von 5 Minuten

Nach Klimawechseltest wird wiederum die Klebkraft nach Prüfmethode A bestimmt.

### F. Test zur elektrischen Leitfähigkeit

Die Haftklebemasse wird als einseitiges Haftklebeband auf einem ITO-Film (Elecrysta®) der Firma Nitto Denko verklebt. Der ITO-Film hat die Dimension 12 cm x 2 cm. Die Verklebungsfläche beträgt 10 cm x 2 cm, so dass an jedem Ende noch jeweils 1 cm für elektrische Messungen verbleiben. Anschließend wird der Verbund in einem Klimaschrank für 500 h bei 85°C und 20 % Luftfeuchtigkeit gelagert. Es wird dann der Oberflächenwiderstand nach DIN 53482 gemessen. Anschließend wird der prozentuale Abfall im Vergleich zu unbehandelter ITO-Folie bestimmt.

### G. Gelpermeationschromatographie (GPC)

Mittels GPC können die mittleren Molmassen (M_{w}) von Polymeren bestimmt werden. Für die M_{w} Bestimmung der MQ-Harze wurden folgende Einstellungen verwendet: Eluent Toluol; Messtemperatur 23°C; Vorsäule PSS-SDV, 5 µm, 10² Å (10 nm), ID 8.0 mm x 50 mm; Auftrennung: Säulen PSS-SDV, 5 µm, 10² Å (10 nm) sowie 10³Å (100 nm) und 10⁶ Å (10⁵ nm) mit jeweils ID 8.0 mm x 300 mm; Probenkonzentration 3 g/l, Durchflussmenge 1,0 ml pro Minute; Polydimethylsiloxan-Standards).

### Beispiele

Die Beschichtungen erfolgten in den Beispielen auf einer üblichen Laborbeschichtungsanlage für kontinuierliche Beschichtungen. Die Beschichtung wurde in einem Reinraum ISO 5 nach Norm ISO 14644-1 vorgenommen. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 180°C frei wählbar.

### Herstellung der Muster:

Die Beschichtung der Haftklebemassen erfolgte aus der Lösung auf Trennfolie. Der so erhaltene Klebefilm wurde nach dem Trocknen und Vernetzen mit einer weiteren Trennfolie kaschiert. Zur Messung der Klebkraft wurde eine Trennfolie gegen eine 23 µm dicke PET Folie ausgetauscht.

### Klebmassenherstellung

Die lösungsmittelhaltige silylierte PU-Haftklebemasse SPUR⁺ 3.0 PSA von Momentive Performance Chemicals wurde mit Ehtyacetat auf einen Feststoffgehalt von 35% verdünnt, mit Harz, 0,7 Gew.-% Wasser und 0,02 Gew.-% Formrez UL-28 abgemischt und 30 min. gerührt. Anschließend wurde mittels Rakel auf einen Trennfilm ausgestrichen. Nach der Trocknung bei 23°C für 20 min. und 5 min. bei 80°C erhält man auf dem Trennfilm eine trockene silylierte PU-Haftklebemassenschicht. Es wurden Massenaufträge (nach der Trocknung) von 50, 100 und 150 g/m² (entspricht Schichtdicken von ungefähr 50, 100 und 150 µm) realisiert.

| Beispiel | Harz | Harzzugabe in % | ESH Dosis in kGy (Beschleunigungsspannung = 100 kV) | Masseauftrag in g/m² | Klebkraft (Test A) in N/cm |
|---|---|---|---|---|---|
| 1 (n.e.) | - | - | - | 50 | 4,3 |
| 2 (n.e.) | - | - | 20 | 50 | 4,2 |
| 3 (n.e.) | - | - | - | 100 | 5,1 |
| 4 (n.e.) | - | - | - | 150 | 6,0 |
| 5 (n.e.) | DC 2- 7066 | 20 | - | 50 | 5,2 |
| 6 (n.e.) | DC 2- 7066 | 20 | 20 | 50 | 5,3 |
| 7 | DC 2- 7066 | 20 | - | 100 | 6,2 |
| 8 | DC 2- 7066 | 20 | - | 150 | 6,9 |
| 9 (n.e.) | KE-311 | 30 | - | 50 | 4,8 |
| 10 (n.e.) | KE-311 | 30 | 20 | 50 | 4,6 |
| 11 | KE-311 | 30 | - | 100 | 5,7 |
| 12 | KE-311 | 30 | - | 150 | 6,5 |

### Herstellung eines Referenzbeispiel 1:

Für die Polymerisation wurden von Stabilisatoren gereinigte Monomere eingesetzt. Ein für radikalische Polymerisationen konventioneller 2 L-Glasreaktor wurde mit 32 g Acrylsäure, 168 g n-Butylacrylat, 200 g 2-Ethylhexylacrylat, und 300 g Aceton/Isopropanol (Verhältnis 97:3) befüllt. Nach 45 Minuten Durchleiten mit Stickstoffgas unter Rühren wurde der Reaktor auf 58°C geheizt und 0,2 g Vazo67® (Fa. DuPont, 2,2'-Azodi(2-methylbutyronitril)) hinzu gegeben. Anschließend wurde das äußere Heizbad auf 75°C erwärmt und die Reaktion konstant bei dieser Außentemperatur durchgeführt. Nach 1 h Reaktionszeit wurde wiederum 0,2 g Vazo 67® (Fa. DuPont, 2,2'-Azodi(2-methylbutyronitril)) hinzu gegeben. Nach 3 und 6 h wurde mit jeweils 150 g Aceton/Isopropanoi Gemisch verdünnt. Zur Reduktion der Restinitiatoren wurden nach 8 und nach 10 h jeweils 0,1 g Perkadox 16® (Fa. Akzo Nobel, Di(4-tert-butylcyclohexyl) peroxydicarbonat) hinzu gegeben. Die Reaktion wurde nach 22 h Reaktionszeit abgebrochen und auf Raumtemperatur abgekühlt. Anschließend wurde auf einen Feststoffgehalt von 30 % mit Isopropanol verdünnt und unter starkem Rühren 0,3 Gew.-% Aluminiumacetylacetonat hinzu gegeben. Die Lösung wurde dann analog zu den erfinderischen Beispielen 1 - 3 auf einer Trennfolie ausgestrichen und 10 Minuten bei 120°C getrocknet. Der Masseauftrag betrug 50 g/m². Die Klebkraft nach Testmethode A betrug 6,4 N/cm.

### Ergebnisse

Die Prüfmusterherstellung zeigte, dass die Beispiele 1 - 12 (n. e. = nicht erfindungsgemäß) alle hohe Klebkräfte aufweisen. Die Klebkräfte sind abhängig vom Masseauftrag. Das Referenzmuster 1 auf Polyacrylathaftklebemassenbasis zeigt ähnliche Klebkräfte nach Testmethode A. Die Beispiele 1 - 12 belegen, dass alle Beispiele zur permanenten Verklebungen und nicht für temporäre Verklebungen geeignet sind.

Für die Eignung im optischen Bereich wurden ferner optische Messungen durchgeführt. Die Lichtdurchlässigkeit wird in Form der Transmission nach Testmethode B bestimmt. Die Eintrübung der Haftklebemassen wird durch Testmethode C bestimmt und durch den Haze-Wert beschrieben. Die Ergebnisse sind in folgender Tabelle 1 zusammengefasst.

| **Tabelle 1** | | |
|---|---|---|
| Beispiel | Transmission (Test B) in % | Haze (Test C) in % |
| 1 (n.e.) | 92 | 0,7 |
| 2 (n.e.) | 92 | 0,4 |
| 3 (n.e.) | 92 | 0,6 |
| 4 (n.e.) | 92 | 0,7 |
| 5 (n.e.) | 92 | 0,4 |
| 6 (n.e.) | 92 | 0,5 |
| 7 | 92 | 0,8 |
| 8 | 92 | 0,4 |
| 9(n.e.) | 92 | 0,6 |
| 10 (n.e.) | 92 | 0,7 |
| 11 | 92 | 0,4 |
| 12 | 92 | 0,5 |
| Referenz1 | 93 | 0,4 |

Aus den Prüfungen geht hervor, dass alle Beispiele hohe Transmissionswerte von 92 % aufweisen, wobei diese durch die Lichtreflektion gemindert sind. Bei Glas/Glas-Verklebungen können abzüglich der Reflektionsverluste Transmissionswerte größer 99 % gemessen werden. Das Referenzbeispiel auf Polyacrylatbasis zeigt ähnliche Transmissionswerte. Die silylierten PU-Haftklebemassen sind somit für hohe optische Transmissionen geeignet. Die Haze-Messungen nach Testmethode C bestätigen dies. Die gemessenen Haze-Werte liegen für alle Haftklebemassen unterhalb 1 % und erfüllen damit höchste Anforderungen.

Im Folgenden wurden weiterhin verschiedene Alterungsuntersuchungen durchgeführt. Als erstes wurde ein Lichtbeständigkeitstest nach Testmethode D durchgeführt. Hier wird überprüft, ob durch lange Sonnenlichtbestrahlung eine Verfärbung oder Vergilbung eintritt. Dies ist besonders wichtig für optische Anwendungen, die einer Dauerbestrahlung, wie z.B. durch ein Display, ausgesetzt sind oder im Außenbereich eingesetzt werden. Die Ergebnisse sind in Tabelle 2 zusammengefasst.

| Tabelle 2 | |
|---|---|
| Beispiel | Lichtbestandigkeit (Test 0) Transmission in % |
| 1 (n.e.) | 92 |
| 2 (n.e.) | 92 |
| 3 (n.e.) | 92 |
| 4 (n.e.) | 92 |
| 5 (n-e.) | 92 |
| 6 (n.e.) | 92 |
| 7 | 92 |
| 8 | 92 |
| 9 (n.e.) | 92 |
| 10 (n.e.) | 92 |
| 11 | 92 |
| 12 | 92 |
| Referenz1 | 91 |

Tabelle 2 kann entnommen werden, dass alle Beispiele und Referenzbeispiel 1 eine stabile Transmission aufweisen und keinen oder im Fall des Referenzbeispiels 1 einen nur sehr geringen Abfall in der Transmission zeigen.

Ein weiterer Alterungstest umfasst eine Wechselklimaprüfung. Hier wird die Situation simuliert, dass die Klebemasse einem sehr unterschiedlichen Klima ausgesetzt wird, was wiederum der Fall sein kann für Endanwendungen im Mobiletelefonbereich. Der Wechselklimatest wurde nach Testmethode E durchgeführt. Die Ergebnisse sind in Tabelle 3 dargestellt.

| Tabelle 3 | | |
|---|---|---|
| Beispiel | Klebkraft (Test A) in N/cm | Klebkraft nach Wechselklimatest (Test E) in N/cm |
| 1 (n.e.) | 4,3 | 4,4 |
| 2 (n.e.) | 4,2 | 4,4 |
| 3 (n.e.) | 5,1 | 5,4 |
| 4 (n.e.) | 6,0 | 6,2 |
| 5 (n.e.) | 5,2 | 5,5 |
| 6 (n.e.) | 5,3 | 5,5 |
| 7 | 6,2 | 6,5 |
| 8 | 6,9 | 7,2 |
| 9 (n.e.) | 4,8 | 5,1 |
| 10 (n.e.) | 4,6 | 4,8 |
| 11 | 5,7 | 5,9 |
| 12 | 6,5 | 6,9 |
| Referenz1 | 6,4 | 6,9 |

Die Messungen aus Tabelle 3 zeigen ein sehr stabiles Verklebungsniveau für alle Beispiele. Als einzige Auffälligkeit wurde beim Referenzbeispiel 1 eine Blasenbildung festgestellt, verursacht vermutlich durch Ausgasungen aus der PET-Folie. Die Beispiele 1-12 zeigten ein solches Problem dagegen nicht. Auch traten in keinem der Beispiele Abhebungen oder Ähnliches auf. Dies ist ein weiteres Indiz für eine ausreichend hohe Verklebungsfestigkeit.

Als letzte Messung wurde noch einmal mit allen Beispielen und Referenzbeispielen eine Verklebung auf einem ITO-Film vorgenommen. ITO-Filme werden sehr häufig zur Herstellung von Touch Panels eingesetzt. Ziel ist hier, dass auch nach der Verklebung mit einer Haftklebemasse die elektrische Leitfähigkeit der ITO-Schicht nicht negativ beeinflusst wird. Mit der Testmethode F wird die Verklebung über einen längeren Zeitraum gemessen. Hiermit wird simuliert, ob Alterungseffekte auftreten, die die elektrische Leitfähigkeit über die Zeit negativ beeinflussen. Der Verlust in Prozent wird durch den Vergleich der Frischmessung mit dem gelagerten Verbund bestimmt. Für Touch Panel Anwendungen sind Verluste von kleiner 5 % erforderlich, um eine gute Eignung zu besitzen. Die Ergebnisse zu diesen Untersuchungen sind in Tabelle 4 zusammengefasst.

| Tabelle 4 | |
|---|---|
| Beispiel | Test zur elektrischen Leitfähigkeit (Test F) verlust in % |
| 1 (n.e.) | < 1 |
| 2 (n.e.) | < 1 |
| 3 (n.e.) | < 1 |
| 4 (n.e.) | < 1 |
| 5 (n.e.) | < 1 |
| 6 (n.e.) | < 1 |
| 7 | < 1 |
| 8 | < 1 |
| 9 (n.e.) | < 1 |
| 10 (n.e.) | < 1 |
| 11 | < 1 |
| 12 | < 1 |
| Referenz1 | 15 |

Die Messergebnisse verdeutlichen, dass das Vergleichsbeispiel Referenz 1 einen deutlichen Abfall der elektrischen Leitfähigkeit verursacht. Referenzbeispiel 1 basiert auf einem Polyacrylat und enthält Acrylsäuregruppen. Dagegen zeigen die Beispiele 1 bis 12 so gut wie keinen Verlust der elektrischen Leitfähigkeit von ITO. Somit sind die Beispiele 1 - 12 hervorragend zur Verklebung von ITO-Filmen geeignet und weisen signifikante Vorteile gegenüber handelsüblichen Acrylathaftklebemassen auf, die ebenfalls im optischen Bereich zur ITO-Verklebung eingesetzt werden.

Zusammenfassend belegen die Messergebnisse, dass die erfinderischen Haftklebemassen sowie deren erfinderische Verwendung sehr gut für die Verklebung von Touch Panels oder die Verklebung von ITO-Follen für kapazitive Touch Panels geeignet sind. Die Haftklebemassen weisen signifikante Vorteile gegenüber bestehenden Haftklebemassen auf z.B. Polyacrylatbasis auf.

## Patentansprüche

1. Verwendung einer Haftklebemasse basierend auf silylierten Polyurethanen für die Verklebung optischer Bauteile, insbesondere optischer Folien, wobei die Haftklebemasse auf folgenden Komponenten basiert:
a) einem Urethanpolymer, generiert aus di- oder multifunktionellen Isocyanaten (NCO) und di- oder multifunktionellen Alkoholen (OH), wobei das NCO/OH Verhältnis entweder <1 oder >1 ist,
welches mit mindestens einer Si(OR)₃₋ₓ Gruppe funktionalisiert ist, wobei R ein Alkyl- oder Acylrest und x die Zahl 0 oder 1 ist,
b) einem organometallischen Katalysator aus der 3., 4. oder 5. Hauptgruppe
c) einer katalytischen Menge Wasser,
d) einem Organopolysiloxanharz mit der Formel: (R¹₃SiO_{1/2})_{y}(SiO_{4/2})₁,
wobei R¹ eine substituierte oder unsubstituierte monovalente Kohlenwasserstoffgruppe, ein Wasserstoffatom oder eine Hydroxygruppe und y eine Zahl zwischen 0,5 und 1,2 ist, oder
einem klebrigmachenden Harz auf Basis von Terpenen, Terpen-Phenolen, Cumarenen, Indenen oder Kohlenwasserstoffen mit einem Erweichungsbereich zwischen 80 und 150°C,
e) optional weiteren Additiven oder Füllstoffen,
und
wobei die Haftklebemasse eine Transmission nach ASTM D 1003 größer 86 % und einen Haze nach ASTM D 1003 kleiner 5 % aufweist und die Haftklebemasse in Form eines Klebebandes bereitgestellt ist, das mindestens eine Klebeschicht mit einer Schichtdicke im Bereich von 100 bis 250 µm aufweist.

2. Verwendung nach Anspruch 1, **dadurch gekennzeichnet,**
**dass** das Verhältnis der (R¹₃SiO_{1/2})_{y}-Einheiten ("M-Einheiten") zu den (SiO_{4/2})₁-Einheiten ("Q-Einheiten") im Bereich von 0,5 bis 1,2 liegt.

3. Verwendung nach Anspruch 1 oder 2, **dadurch gekennzeichnet,**
**dass** das gewichtsmittlere Molekulargewicht MW der Organopolysiloxanharz (MQ-Harze) im Bereich von 500 g/mol bis 100.000 g/mol liegt, vorzugsweise im Bereich von 1.000 g/mol bis 25.000 g/mol.

4. Verwendung nach mindestens einem der vorstehenden Ansprüche, **dadurch gekennzeichnet,**
**dass** die Komponente d) ein klebrigmachendes Harz auf Basis von Terpenen, Terpen-Phenolen, Cumarenen, Indenen oder Kohlenwasserstoffen mit einem Erweichungsbereich zwischen 80 und 150°C ist und das Anteilsverhältnis silylierter PU-Klebmasse zu klebrigmachendem Harz im Bereich von 10:90 bis 90:10, bevorzugt im Bereich von 40:60 bis zu 90:10, liegt.

5. Verwendung nach einem der vorhergehenden Ansprüche, **dadurch gekennzeichnet,**
**dass** die Klebemasse mit aktinischer Strahlung vernetzt ist, vorzugsweise mit Elektronenstrahlen in einer Dosis von mindestens 10 kGy.

6. Verwendung nach einem der vorhergehenden Ansprüche, **dadurch gekennzeichnet,**
**dass** das optische Bauteil elektrisch leitfähig ist und/oder eine mikrostrukturierte Oberfläche aufweist.

7. Verwendung nach mindestens einem der vorstehenden Ansprüche, **dadurch gekennzeichnet,**
**dass** die Klebeschicht in nur einem Beschichtungsschritt hergestellt ist.

## Claims

1. Use of a pressure-sensitive adhesive based on silylated polyurethanes for the adhesive bounding of optical components, more particularly optical films, the pressure-sensitive adhesive being based on the following components:
a) a urethane polymer generated from di- or polyfunctional isocyanates (NCO) and di- or polyfunctional alcohol (OH), the NCO/OH ratio being either <1 or >1,
the polymer being functionalized with at least one Si(OR)_{3·x} group, where R is an alkyl or acyl radical and x is 0 or 1,
b) an organometallic catalyst from main group 3, 4 or 5,
c) a catalytic amount of water,
d) an organopolysiloxane resin with the following formula: (R¹₃SiO_{1/2})y(SiO_{4/2})₁, where R¹ is a substituted or unsubstituted monovalent hydrocarbon group, a hydrogen atom or a hydroxyl group and y is a number between 0.5 and 1.2, or
a tackifying resin based on terpenes, terpene-phenols, coumarins, indenes or hydrocarbons with a softening range between 80 and 150°C,
and
e) optionally further additives or fillers, the pressure-sensitive adhesive having an ASTM D 1003 transmittance of more than 86% and an ASTM D 1003 haze of less than 5% and the pressure-sensitive adhesive being provided in the form of an adhesive tape which has at least one adhesive layer having a layer thickness in the range from 100 to 250 µm,

2. Use according to Claim 1, **characterized in that** the ratio of the (R¹3SiO_{1/2})_{y} units ("M units") to the (SiO_{4/2})₁ units ("Q units") is in the range from 0.5 to 1.2.

3. Use according to Claim 1 or 2, **characterized in that** the weight-average molecular weight MW of the organopolysiloxane resins (MQ resins) is in the range from 500 g/mol to 100 000 g/mol, preferably in the range from 1000 g/mol to 25 000 g/mol.

4. Use according to at least one of the preceding claims, **characterized in that** the component d) is a tackifying resin based on terpenes, terpene-phenols, coumarins, indenes or hydrocarbons with a softening range between 80 and 150°C, and the proportional ratio of silylated PU adhesive to tackifying resin is in the range from 10:90 to 90:10, preferably in the range from 40:60 up to 90:10.

5. Use according to any of the preceding claims, **characterized in that** the adhesive is crosslinked with actinic radiation, preferably with electron beams in a dose of at least 10 kGy.

6. Use according to any of the preceding claims, **characterized in that** the optical component is electrically conductive and/or has a microstructured surface.

7. Use according to at least one of the preceding claims, **characterized in that** the adhesive layer is produced in only one coating steep.

## Revendications

1. Utilisation d'une masse autoadhésive à base de polyuréthanes silylés pour le collage de pièces optiques, en particulier de feuilles optiques, la masse autoadhésive étant à base des composants suivants :
a) un polymère d'uréthane, généré à partir d'isocyanates difonctionnels ou multifonctionnels (NCO) et d'alcools difonctionnels ou multifonctionnels (OH), le rapport NCO/OH étant soit < 1, soit > 1,
qui est fonctionnalisé par au moins un groupe Si(OR)₃ x, R représentant un radical alkyle ou acyle et x représentant le nombre 0 ou 1,
b) un catalyseur organométallique du 3ème, 4ème ou 5ème groupe principal
c) une quantité catalytique d'eau,
d) une résine d'organopolysiloxane présentant la formule : (R¹₃SiO_{1/2})_{y}(SiO_{4/2})₁,
R¹ représentant un groupe hydrocarboné monovalent substitué ou non substitué, un atome d'hydrogène ou un groupe hydroxy et y valant un nombre entre 0,5 et 1,2,
ou une résine rendant adhésif à base de terpènes, de terpène-phénols, de coumarines, d'indènes ou d'hydrocarbures présentant une plage de ramollissement entre 80 et 150°C,
e) éventuellement d'autres additifs ou charges,
et
la masse autoadhésive présentant une transmission selon la norme ASTM D 1003 supérieure à 86% et un voile selon la norme ASTM D 1003 inférieur à 5% et la masse autoadhésive étant préparée sous forme d'une bande adhésive, qui présente au moins une couche adhésive d'une épaisseur de couche dans la plage de 100 à 250 µm.

2. Utilisation selon la revendication 1, **caractérisée en ce que** le rapport des unités (R¹₃SiO_{1/2})_{y} ("unités M") aux unités (SiO_{4/2})₁ ("unités Q") se situe dans la plage de 0,5 à 1,2.

3. Utilisation selon la revendication 1 ou 2, **caractérisée en ce que** le poids moléculaire pondéral moyen Mw de la résine d'organopolysiloxane (résine MQ) se situe dans la plage de 500 g/mole à 100 000 g/mole, de préférence dans la plage de 1000 g/mole à 25 000 g/mole.

4. Utilisation selon au moins l'une quelconque des revendications précédentes, **caractérisée en ce que** le composant d) est une résine rendant adhésif à base de terpènes, de terpène-phénols, de coumarines, d'indènes ou d'hydrocarbures présentant une plage de ramollissement entre 80 et 150°C et le rapport des proportions de la masse adhésive de PU silylé à résine rendant adhésif se situe dans la plage de 10:90 à 90:10, de préférence dans la plage de 40:60 à 90:10.

5. Utilisation selon l'une quelconque des revendications précédentes, **caractérisée en ce que** la masse adhésive est réticulée par un rayonnement actinique, de préférence par des rayons électroniques à une dose d'au moins 10 kGy.

6. Utilisation selon l'une quelconque des revendications précédentes, **caractérisée en ce que** la pièce optique est électriquement conductrice et/ou présente une surface microstructurée.

7. Utilisation selon au moins l'une quelconque des revendications précédentes, **caractérisée en ce que** la couche adhésive n'est préparée que par une seule étape de revêtement.
